# EUROPÄISCHE PATENTANMELDUNG

(11) **EP 4 174 328 A1**
(43) Veröffentlichungstag der Anmeldung: **03.05.2023**
(21) Anmeldenummer: 22202655.1
(22) Anmeldetag: 20.10.2022
(51) Int. Cl.: F16B 5/02, F16B 37/08

(54) **MUTTER ZUM FESTLEGEN EINES BAUTEILS AN EINEM TRÄGER**

(30) Priorität: 29.10.2021 DE 102021212266
(71) Anmelder: BLANCO GmbH + Co KG, 75038 Oberderdingen (DE)
(72) Erfinder: Keller, Stefan, 74374 Zaberfeld (DE)
(74) Vertreter: Ullrich & Naumann PartG mbB

(57) **Zusammenfassung**

Die Erfindung betrifft eine Mutter (1) zur Festlegung eines Bauteils an einem Träger, insbesondere einer Sanitärarmatur an einer Arbeitsplatte, umfassend ein erstes Mutterteil (2), und ein zweites Mutterteil (3), wobei das erste Mutterteil zumindest zwei Gewindelaschen (4) aufweist, die auf ihrer radialen Innenseite ein Gewinde (5) aufweisen, wobei die Gewindelaschen unter einem ersten Winkel (91) radial nach außen vorstehend angeordnet sind, und wobei die beiden Mutterteile relativ zueinander axial verschiebbar angeordnet sind, derart, dass in einer ersten Position - Offenposition - die Gewindelaschen des ersten Mutterteils radial nach außen vorstehend angeordnet sind, und dass in einer zweiten Position - Geschlossenposition - die Gewindelaschen des ersten Mutterteils mittels des zweiten Mutterteils radial nach innen gedrückt werden zum Eingriff in ein entsprechendes Außengewinde des Bauteils.

## Beschreibung

Die Erfindung betrifft eine Mutter zur Festlegung eines Bauteils an einem Träger, insbesondere einer Sanitärarmatur an einer Arbeitsplatte, umfassend ein erstes Mutterteil und ein zweites Mutterteil, wobei das erste Mutterteil zumindest zwei Gewindelaschen aufweist, die auf ihrer radialen Innenseite ein Gewinde aufweisen.

Die Erfindung betrifft weiter ein System zur Festlegung eines Bauteils an einem Träger, umfassend eine Mutter.

Die Erfindung betrifft darüber hinaus ein Verfahren zum Festlegen eines Bauteils an einem Träger.

Die Erfindung betrifft ebenfalls ein Verfahren zum Lösen eines an einem Träger festgelegten Bauteils.

Obwohl auf beliebige Bauteile anwendbar, wird die vorliegende Erfindung in Bezug auf Bauteile in Form von Sanitärarmaturen beschrieben.

Obwohl auf beliebige Träger anwendbar, wird die vorliegende Erfindung in Bezug auf Träger in Form von Arbeitsplatten beschrieben.

Sanitärarmaturen sind in vielfältigster Weise bekannt geworden. Diese werden üblicherweise an einer Arbeitsplatte festgelegt, indem die Sanitärarmatur sich mit einem entsprechenden Armaturenschaft teilweise durch eine Befestigungsöffnung der Arbeitsplatte erstreckt. Zur Festlegung der Sanitärarmatur weist der Armaturenschaft ein Außengewinde auf, auf das eine Mutter aufgeschraubt wird.

Problematisch hierbei ist, dass der Armaturenschaft häufig lang ist, um auch bei unterschiedlichen Dicken der Arbeitsplatte verwendet werden zu können. Bei der Montage der Sanitärarmatur ist es dann bei dünnen Arbeitsplatten aufwendig und zeitintensiv, die Mutter bis zur endgültigen Festlegungsposition auf das Außengewinde des Gewindeschafts aufzubringen.

Aus der EP 3 786 374 A1 ist eine Mutter bekannt geworden, die nachgiebige Gewindelaschen aufweist, die ein Aufschieben der Mutter bis in ihre Endposition und so eine schnellere Festlegung der Sanitärarmatur am Träger ermöglichen. Problematisch hierbei ist jedoch, dass die Mutter einen komplizierten Aufbau aufweist und eine Lösbarkeit nach dem Festlegen der Sanitärarmatur - wenn überhaupt - nur sehr schwierig beziehungsweise zeitaufwendig möglich ist, da ein einfaches Schieben über den Armaturenschaft in der Demontagerichtung nicht möglich ist.

Eine Aufgabe der vorliegenden Erfindung ist es daher, eine Mutter zum Festlegen eines Bauteils an einem Träger und ein System zum Festlegen eines Bauteils an einem Träger anzugeben, welche einfach und kostengünstig herstellbar sind, ein einfaches und schnelles Festlegen und Lösen des Bauteils ermöglichen und den für die Montage des Bauteils notwendigen Betätigungsraum für einen Monteur reduzieren.

Eine weitere Aufgabe der vorliegenden Erfindung ist es, eine alternative Mutter zum Festlegen eines Bauteils an einem Träger und ein alternatives System zum Festlegen eines Bauteils an einem Träger anzugeben.

Eine weitere Aufgabe der vorliegenden Erfindung ist es, ein Verfahren zum Festlegen eines Bauteils an einem Träger und ein Verfahren zum Lösen eines an einem Träger festgelegten Bauteils anzugeben, welche einfach, schnell und zuverlässig durchgeführt werden können bei verringertem, für die Montage benötigtem Betätigungsraum für einen Monteur.

Eine weitere Aufgabe der vorliegenden Erfindung ist es, ein alternatives Verfahren zum Festlegen eines Bauteils an einem Träger und ein alternatives Verfahren zum Lösen eines an einem Träger festgelegten Bauteils anzugeben.

In einer Ausführungsform löst die vorliegende Erfindung die vorstehend genannten Aufgaben mit einer Mutter zur Festlegung eines Bauteils an einem Träger, insbesondere einer Sanitärarmatur an einer Arbeitsplatte, umfassend ein erstes Mutterteil und ein zweites Mutterteil, wobei das erste Mutterteil zumindest zwei Gewindelaschen aufweist, die auf ihrer radialen Innenseite ein Gewinde aufweisen, wobei die Gewindelaschen unter einem ersten Winkel radial nach außen vorstehend angeordnet sind und wobei die beiden Mutterteile relativ zueinander axial verschiebbar angeordnet sind, derart, dass in einer ersten Position - Offenposition - die Gewindelaschen des ersten Mutterteils radial nach außen vorstehend angeordnet sind und dass in einer zweiten Position - Geschlossenposition - die Gewindelaschen des ersten Mutterteils mittels des zweiten Mutterteils radial nach innen gedrückt werden zum Eingriff in ein entsprechendes Außengewinde des Bauteils.

In einer weiteren Ausführungsform löst die vorliegende Erfindung die vorstehend genannten Aufgaben mit einem System zur Festlegung eines Bauteils an einem Träger, umfassend eine Mutter gemäß einem der Ansprüche 1-11, wobei das Bauteil ein Au-ßengewinde aufweist, welches zu dem Gewinde der Mutter korrespondiert, sodass die Mutter in ihrer Geschlossenposition auf das Außengewinde aufschraubbar ist und wobei in ihrer Offenposition das Gewinde zumindest in einem Bereich einen Innendurchmesser aufweist, der größer ist als der Außendurchmesser des Außengewindes.

In einer weiteren Ausführungsform löst die vorliegende Erfindung die vorstehend genannten Aufgaben mit einem Verfahren zum Festlegen eines Bauteils an einem Träger, umfassend die Schritte
- Bereitstellen einer Mutter gemäß einem der Ansprüche 1-11 in der Offenposition,
- Bereitstellen des Bauteils, wobei das Bauteil ein Außengewinde aufweist, welches zu dem Gewinde der Mutter korrespondiert, sodass die Mutter in ihrer Geschlossenposition auf das Außengewinde aufschraubbar ist,
- Anordnen des Bauteils an dem Träger,
- Schieben der Mutter in ihrer Offenposition über das Außengewinde des Bauteils, bis die Mutter mit ihrem zweiten Mutterteil an dem Träger anliegt,
- Betätigen des ersten Mutterteils bis sich die Mutter in ihrer Geschlossenposition befindet zum Eingriff des Gewindes in das Außengewinde des Bauteils, und
- Betätigen des Gewindes der Mutter durch Drehen der Mutter zum Festlegen des Bauteils an dem Träger.

In einer weiteren Ausführungsform löst die vorliegende Erfindung die vorstehend genannten Aufgaben mit einem Verfahren zum Lösen eines an einem Träger festgelegten Bauteils, umfassend die Schritte
- Bereitstellen einer Mutter gemäß einem der Ansprüche 1-11 in ihrer Geschlossenposition an dem Bauteil, wobei das Bauteil ein Außengewinde aufweist, welches zu dem Gewinde der Mutter korrespondiert, und wobei das Gewinde der Mutter in das Außengewinde des Bauteils eingreift,
- Betätigen des Gewindes der Mutter durch Drehen der Mutter zum Lösen des Bauteils von dem Träger, bis sich die Mutter in ihrer Offenposition befindet, und
- Schieben der Mutter in ihrer Offenposition über das Außengewinde des Bauteils zum Lösen des Bauteils von dem Träger.

Einer der damit erzielten Vorteile ist, dass damit eine vereinfachte Montage von Bauteilen an Trägern mittels der Mutter ermöglicht wird. Ein weiterer Vorteil ist, dass bei der Montage die Mutter im Wesentlichen selbstschließend von ihrer Offenposition in die Geschlossenposition gezwungen wird, und auf diese Weise eine schnelle Montage mit wenigen Handgriffen ermöglicht wird. Ein weiterer Vorteil ist die einfache und kostengünstige Herstellung der beiden Mutterteile, beispielsweise aus Kunststoff, vorzugsweise mittels Spritzgießen.

Weitere Merkmale, Vorteile und weitere Ausführungsformen der Erfindung sind im Folgenden beschrieben oder werden dadurch offenbar.

Gemäß einer vorteilhaften Weiterbildung sind das erste und zweite Mutterteil aneinander mittels einer Festlegeeinrichtung festgelegt, welche insbesondere lösbar ausgebildet ist. Vorteil hiervon ist eine flexible und einfache Festlegung der beiden Mutterteile aneinander, beispielsweise um eine begrenzte axiale Verschieblichkeit bereitzustellen.

Gemäß einer weiteren vorteilhaften Weiterbildung umfasst die Festlegeeinrichtung eine Rast-, Clips- oder Schnappeinrichtung. Vorteil hiervon ist eine einfache und schnelle Festlegung der beiden Mutterteile aneinander.

Gemäß einer weiteren vorteilhaften Weiterbildung ist eine Rückstelleinrichtung angeordnet, die eine Rückstellkraft in Richtung der Offenposition ausübt. Damit kann eine einfache Lösbarkeit der Mutter, beispielsweise wenn das Bauteil zu Wartungszwecken ausgetauscht werden soll, sichergestellt werden. Wird die Mutter entsprechend betätigt, geht die Mutter "automatisch" in ihre Offenposition, sodass diese schnell und einfach, beispielsweise von einem Sanitärarmaturenschaft, abgezogen werden kann.

Gemäß einer weiteren vorteilhaften Weiterbildung umfasst die Rückstelleinrichtung eine Federeinrichtung mit zumindest einer Feder, die zwischen erstem und zweitem Mutterteil angeordnet ist. Vorteil hiervon ist eine einfache und zuverlässige Bereitstellung einer Rückstellkraft.

Gemäß einer weiteren vorteilhaften Weiterbildung umfasst die Rückstelleinrichtung zueinander korrespondierende, aneinander gleitbare und gegenüber der axialen Richtung unter einem zweiten Winkel abgeschrägte Flächen an erstem und zweitem Mutterteil. Vorteil hiervon ist, dass auf ein zusätzliches Bauteil, wie beispielsweise eine Feder, verzichtet werden kann, was die Herstellungskosten der Mutter verringert.

Gemäß einer weiteren vorteilhaften Weiterbildung ist der zweite Winkel größer als der erste Winkel. Damit wird eine ausreichende Rückstellkraft bereitgestellt, ohne dass die Gewindelaschen weit radial nach außen vorragen müssen.

Gemäß einer weiteren vorteilhaften Weiterbildung beträgt der zweite Winkel bezogen auf die axiale Richtung zumindest 5 Grad, insbesondere zumindest 10 Grad, vorzugsweise zumindest 15 Grad, insbesondere zumindest 30 Grad. Damit wird eine ausreichend große Rückstellkraft bereitgestellt, ohne dass der Bauraum für die Mutter wesentlich ansteigt.

Gemäß einer weiteren vorteilhaften Weiterbildung beträgt der erste Winkel der Gewindelaschen bezogen auf die axiale Richtung zumindest 0,1 Grad, insbesondere zumindest 0,5 Grad, vorzugsweise zumindest 1 Grad, insbesondere zumindest 3 Grad. Damit wird ein ausreichender Abstand des Gewindes zum Schieben der Mutter über ein entsprechendes Außengewinde bereitgestellt, bei gleichzeitig geringem radialem Bauraum.

Gemäß einer weiteren vorteilhaften Weiterbildung beträgt die Anzahl der Gewindelaschen weniger als 30, vorzugsweise weniger als 15, insbesondere weniger als 8, vorzugsweise 4. Damit wird eine ausreichende Anzahl von Gewindelaschen bereitgestellt bei gleichzeitig zuverlässigem Eingriff in der Geschlossenposition.

Gemäß einer weiteren vorteilhaften Weiterbildung sind Gewindeflanken des Gewindes zumindest einer der Gewindelaschen, insbesondere von jeder Gewindelasche, im Bereich, der dem Endbereich der zumindest einen Gewindelasche abgewandt ist, gekürzt, insbesondere wobei der Bereich mehr als eine Gewindeflanke und/oder weniger als 5 Gewindeflanken, vorzugsweise 2 Gewindeflanken des Gewindes umfasst. Damit wird ein verbessertes Schieben der Mutter über ein entsprechendes Außengewinde ermöglicht.

Gemäß einer weiteren vorteilhaften Weiterbildung ist eine Führungseinrichtung zur definierten Führung von erstem und zweitem Mutterteil aneinander angeordnet, insbesondere wobei die Führungseinrichtung als Festlegeeinrichtung ausgebildet ist. Vorteil hiervon ist eine definierte Führung der beiden Mutterteile aneinander, was die Handhabung der Mutter, insbesondere bei der Montage, vereinfacht.

Gemäß einer weiteren vorteilhaften Weiterbildung umfasst die Führungseinrichtung eine Kulisseneinrichtung mit zumindest einer Kulisse und einem Kulissenelement, insbesondere wobei das Kulissenelement an dem ersten Mutterteil angeordnet ist. Damit wird eine einfache und gleichzeitig zuverlässige Führung der beiden Mutterteile bereitgestellt.

Gemäß einer weiteren vorteilhaften Weiterbildung sind mehrere Kulissen mit Kulissenelementen angeordnet, insbesondere wobei die Anzahl jeweils mehr als 3 und weniger als 6, vorzugsweise jeweils 4 beträgt. Damit wird eine ausreichende Führung der beiden Mutterteile bereitgestellt.

Gemäß einerweiteren vorteilhaften Weiterbildung sind das zumindest eine Kulis-senelement und die Kulisse jeweils abgerundet. Vorteil hiervon ist ein geringerer Verschleiß der Führungseinrichtung und eine verbesserte Handhabung der Mutter.

Gemäß einer weiteren vorteilhaften Weiterbildung weist in der Offenposition der Mutter das Gewinde zumindest in einem Bereich einen Innendurchmesser auf, der kleiner oder gleich dem Außendurchmesser des Außengewindes ist. Vorteil hiervon ist, dass damit einerseits ein einfaches Aufschieben ohne Drehen ermöglicht wird, da das Gewinde über das Außengewinde im Wesentlichen hinweggleiten kann, gleichzeitig aber sichergestellt ist, dass in der Endmontageposition der Mutter das Gewinde in das Außengewinde direkt greifen kann. Zusätzliche axial von außen auszuübende Kräfte in Montagerichtung sind damit nicht erforderlich, was die Montage insgesamt vereinfacht.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Figur 1: eine Mutter gemäß einer Ausführungsform der vorliegenden Erfindung im Querschnitt in einer Offenposition;
- Figur 2: die Mutter gemäß Figur 1 im Querschnitt in einer Geschlossenposition;
- Figur 3: ein zweites Mutterteil einer Mutter gemäß einer Ausführungsform der vorliegenden Erfindung in perspektivischer Ansicht;
- Figur 4: ein erstes Mutterteil einer Mutter gemäß einer Ausführungsform der vorliegenden Erfindung in perspektivischer Ansicht;
- Figur 5: eine Mutter gemäß einer Ausführungsform der vorliegenden Erfindung in einer Offenposition in perspektivischer Ansicht;
- Figur 6: ein System gemäß einer Ausführungsform der vorliegenden Erfindung;
- Figur 7: in schematischer Form Schritte eines Verfahrens gemäß einer Ausführungsform der vorliegenden Erfindung; und
- Figur 8: in schematischer Form Schritte eines Verfahrens gemäß einer Ausführungsform der vorliegenden Erfindung.

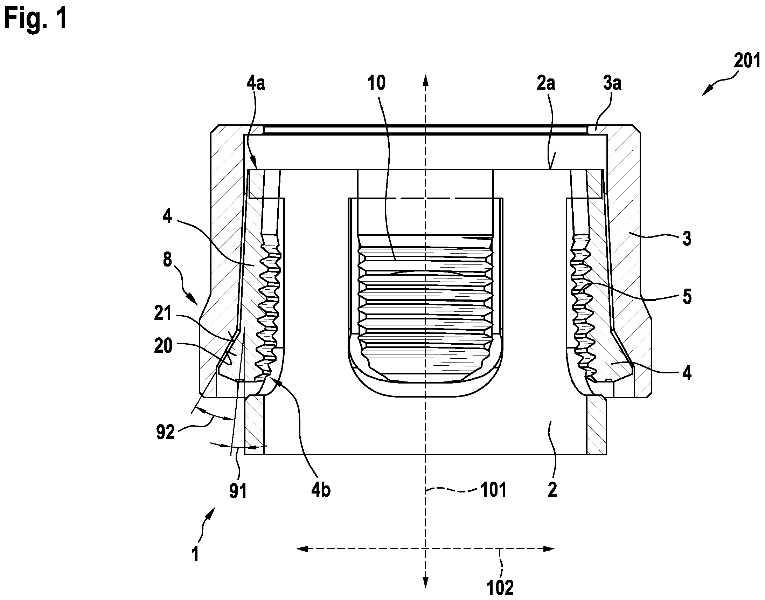

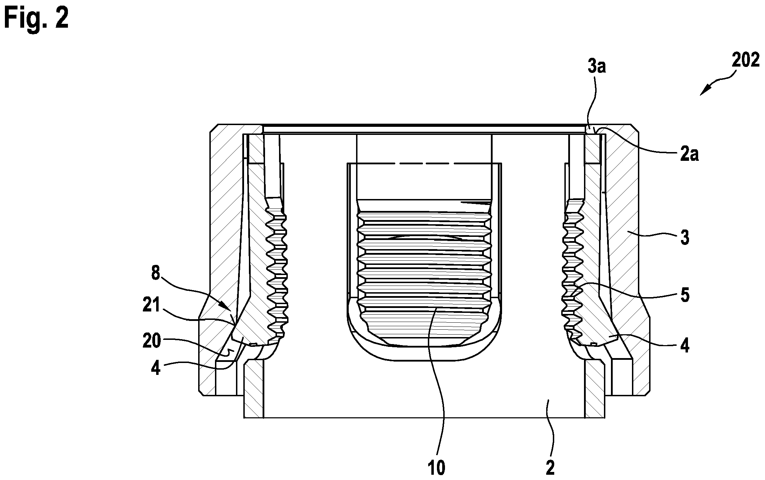

Figur 1 zeigt eine Mutter gemäß einer Ausführungsform der vorliegenden Erfindung im Querschnitt in einer Offenposition und Figur 2 die Mutter gemäß Figur 1 im Querschnitt in einer Geschlossenposition.

In den Figuren 1 und 2 ist eine Mutter 1 in ihrer Offenposition 201 - Figur 1 - und in ihrer Geschlossenposition 202 - Figur 2 - gezeigt. Die Mutter 1 umfasst dabei ein erstes Mutterteil 2 und ein zweites Mutterteil 3. Beide Mutterteile 2, 3 sind kreisförmig im Querschnitt. Das erste Mutterteil 2 weist weiter Gewindelaschen 4 auf, die in radialer Richtung 102 um einen ersten Winkel 91 vorstehend ausgebildet sind. Im Wesentlichen ergibt sich so im Querschnitt eine Dreiecksform für die Gewindelaschen 4, wobei ein Anfangsbereich 4a einer Gewindelasche 4 im Wesentlichen direkt an der Oberfläche des ersten Mutterteils 2 angeordnet ist und ein Endbereich 4b von der Oberfläche des ersten Mutterteils 2 beabstandet ist.

Im Endbereich 4b der jeweiligen Gewindelasche 4 ist auf deren radialen Außenseite eine Gleitfläche 21 angeordnet, die mit einem zweiten Winkel 92, der größer ist als der erste Winkel 91, gegenüber der Axialrichtung 101 radial nach außen geneigt ist.

Das zweite Mutterteil 3 ist - wie auch das erste Mutterteil 2 - im Wesentlichen als Hohlzylinder ausgebildet, wobei der Innendurchmesser des zweiten Mutterteils 3 so ausgebildet ist, dass das zweite Mutterteil 3 über dem ersten Mutterteil 2 angeordnet werden kann. Das zweite Mutterteil 3 weist an seinem in den Figuren 1 und 2 oberen Rand einen radial nach innen ragenden umlaufenden Vorsprung 3a auf, der als Anschlag für das erste Mutterteil 2 mit seiner oberen Randfläche 2a dient (siehe Figur 2). Des Weiteren weist das zweite Mutterteil 3 auf seiner radialen Innenseite eine zur Fläche 21 des ersten Mutterteils 2 korrespondierende Fläche 20 auf, wobei die Flächen 20, 21 so zueinander angeordnet sind, dass diese aneinander gleiten können, wenn sich die beiden Mutterteile 2, 3 in Axialrichtung 101 relativ zueinander bewegen.

Wird nun das erste Mutterteil 2 weiter in das zweite Mutterteil 3 geschoben, mit anderen Worten, bewegt sich die obere Randfläche 2a auf den Vorsprung 3a zu, so gleiten die Flächen 20, 21 aneinander ab. Durch den Winkel 92 der Flächen 20, 21 zueinander werden so die Gewindelaschen 4 radial nach innen gedrückt, sodass das Gewinde 5 der Gewindelaschen 4 in Eingriff mit einem in dem ersten Mutterteil 2 angeordneten Außengewinde eines Bauteils kommen kann. In der Geschlossenposition 202 befindet sich die obere Randfläche 2a direkt am Vorsprung 3a und die Gewindelaschen 4 sind nach innen gedrückt. Der Winkel 91 der Gewindelaschen 4, bedingt durch die von dem zweiten Mutterteil 3 ausgeübte Kraft, beträgt dann zumindest 0 Grad, ist insbesondere sogar negativ, beispielsweise -1,3 Grad, um je nach Material der Mutterteile Federeffekte der Materialien zu kompensieren.

Das Gewinde 5 der Gewindelaschen 4 kann dabei im zum Anfangsbereich 4a benachbarten Bereich abgetragen sein, sprich ein oder mehrere Gewindegänge 10 sind gekürzt, um so wenig Überdeckung mit einem Außengewinde eines Bauteils bereitzustellen, was ein einfacheres Aufschieben der Mutter 1 auf ein entsprechendes Au-βengewinde eines Bauteils ermöglicht.

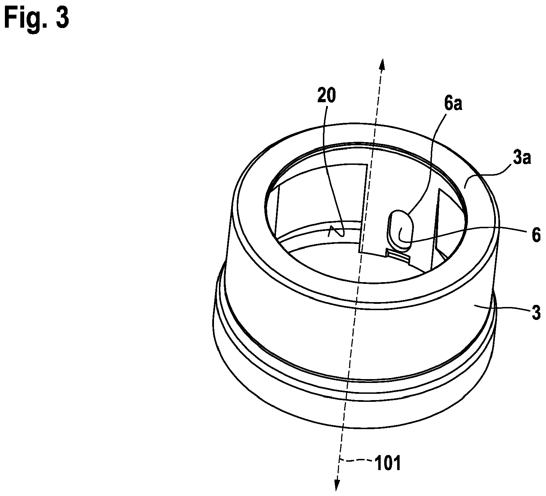

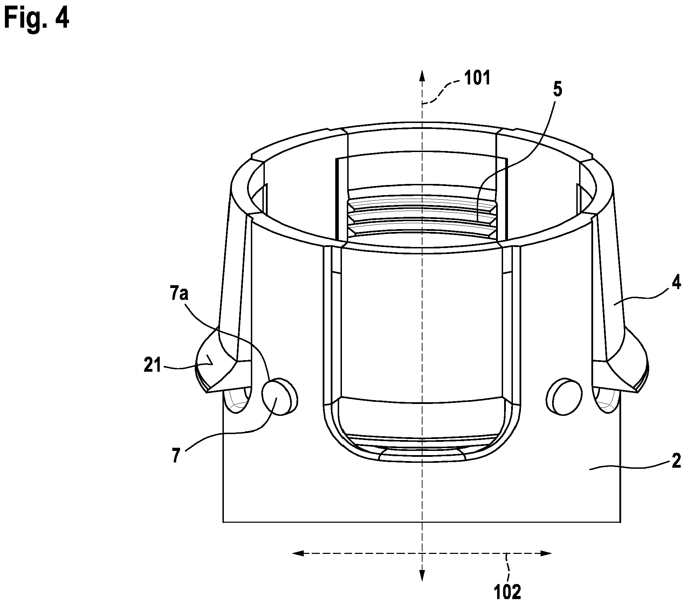

Figur 3 zeigt ein zweites Mutterteil einer Mutter gemäß einer Ausführungsform der vorliegenden Erfindung in perspektivischer Ansicht und Figur 4 zeigt ein erstes Mutterteil einer Mutter gemäß einer Ausführungsform der vorliegenden Erfindung in perspektivischer Ansicht.

In Figur 3 ist ein zweites Mutterteil 3 mit oberem Rand 3a gezeigt. Im Inneren des zweiten Mutterteils 3 ist eine in Axialrichtung 101 längliche Vertiefung 6 gezeigt, welche in ihren Endbereichen abgerundet ist (Bezugszeichen 6a). Die Vertiefung 6 dient hierbei als Kulisse für ein Kulissenelement 7, welches ebenfalls abgerundet ist (Bezugszeichen 7a) und beispielsweise in Form eines sich in Radialrichtung 102 erstreckenden Zylinders ausgebildet ist, wie in Figur 4 gezeigt. Kulissen 6 und Kulissenelemente 7 sind dabei in Bereichen außerhalb der Gewindelaschen 4 beziehungsweise Flächen 20, 21 angeordnet. Mittels der Kulissenführung 6, 7 ist eine definierte Bewegung in Axialrichtung 101 der beiden Mutterteile 2, 3 aneinander möglich. Hierbei sind insgesamt vier Kulissen 6 mit Kulissenelementen 7 angeordnet, die symmetrisch in Umfangsrichtung angeordnet sein können.

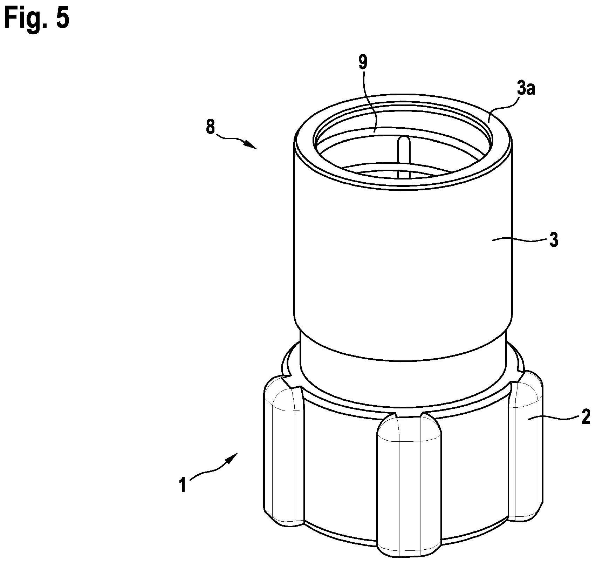

Figur 5 zeigt eine Mutter gemäß einer Ausführungsform der vorliegenden Erfindung in einer Offenposition in perspektivischer Ansicht.

In Figur 5 ist eine Mutter 1 mit zwei Mutterteilen 2, 3 gezeigt. Im Wesentlichen weisen diese den gleichen Aufbau auf, wie die Mutterteile 2, 3 der Figuren 1 und 2. Im Unterschied zu den Mutterteilen 2, 3 der Figuren 1 und 2 wird die Rückstelleinrichtung 8 nicht durch abgeschrägten Flächen 20, 21 gebildet. Stattdessen ist zur Bereitstellung einer Rückstellkraft eine Feder 9 angeordnet, die zwischen axialer Innenseite des umlaufenden Vorsprungs 3a des zweiten Mutterteils 3 und oberer Randfläche 2a (nicht gezeigt) des ersten Mutterteils 2 angeordnet ist. Der Durchmesser der Feder 9 entspricht also im Wesentlichen dem Innendurchmesser des zweiten Mutterteils 3.

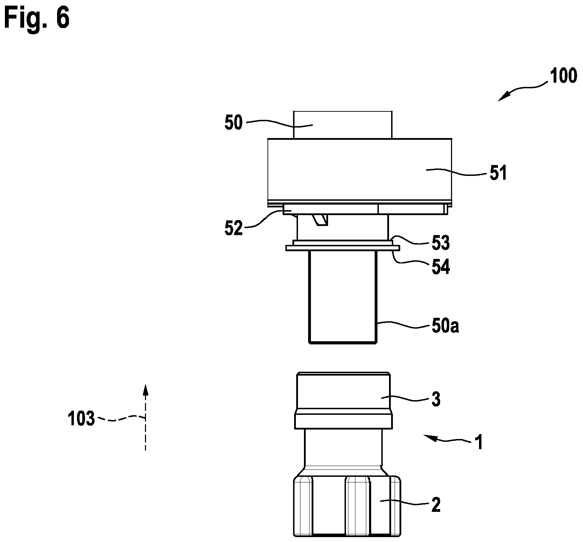

Figur 6 zeigt ein System gemäß einer Ausführungsform der vorliegenden Erfindung.

In Figur 6 ist ein System 100 im Querschnitt gezeigt. Das System 100 umfasst dabei eine Sanitärarmatur 50, die an einer Arbeitsplatte 51 festgelegt werden soll. In der Arbeitsplatte 51 ist hierzu eine Öffnung (nicht gezeigt) angeordnet, durch die ein Schaft der Sanitärarmatur 50 mit Außengewinde 50a hindurchragt.

Zur Festlegung der Sanitärarmatur 50 wird auf den Schaft zunächst in üblicher Weise ein Stabilisationsdreieck 52 und eine Gummischeibe 53 sowie eine Metallscheibe 54 aufgebracht. Anschließend wird die Mutter 1 in Montagerichtung 103 in ihrer Offenposition bis an die Metallscheibe 54 auf den Schaft aufgeschoben, wobei Randfläche 2a und Vorsprung 3a noch voneinander beabstandet sind. Das Gewinde 5 der Gewindelaschen 4 überdeckt hierbei - auch schon beim Aufschieben auf den Schaft - einen Teilbereich des Außengewindes. Hierdurch wird, wenn die Mutter 1 anschließend betätigt wird, eine Kraft in Montagerichtung 103 erzeugt und die Mutter 1 in ihre Geschlossenposition 202 verbracht. Mit anderen Worten wird das zweite Mutterteil 3 relativ zum ersten Mutterteil 2 bewegt und Randfläche 2a und Vorsprung 3a bewegen sich aufeinander zu, bis diese durch weitere Betätigung der Mutter 1 dann aneinander anliegen. Das Gewinde der Mutter 1 greift also in das Außengewinde 50a ein und die Mutter 1 kann auf dem Außengewinde 50a des Schafts der Sanitärarmatur 50 verschraubt werden.

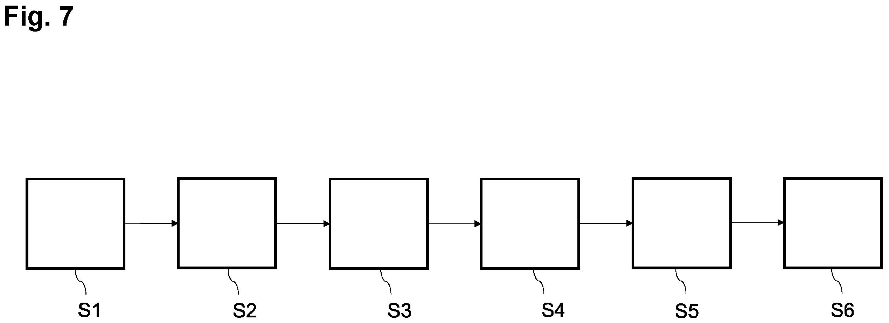

Figur 7 zeigt in schematischer Form Schritte eines Verfahrens gemäß einer Ausführungsform der vorliegenden Erfindung.

Figur 7 zeigt Schritte eines Verfahrens zum Festlegen eines Bauteils an einem Träger.

Das Verfahren umfasst die Schritte:
- Bereitstellen S1 einer Mutter gemäß einem der Ansprüche 1-11 in der Offenposition,
- Bereitstellen S2 des Bauteils, wobei das Bauteil ein Außengewinde aufweist, welches zu dem Gewinde der Mutter korrespondiert, sodass die Mutter in ihrer Geschlossenposition auf das Gewinde aufschraubbar ist,
- Anordnen S3 des Bauteils an dem Träger,
- Schieben S4 der Mutter in ihrer Offenposition über das Außengewinde des Bauteils bis die Mutter mit ihrem zweiten Mutterteil an dem Träger anliegt,
- Betätigen S5 des ersten Mutterteils bis sich die Mutter in ihrer Geschlossenposition befindet zum Eingriff des Gewindes in das Außengewinde des Bauteils, und
- Betätigen S6 des Gewindes der Mutter durch Drehen der Mutter zum Festlegen des Bauteils an dem Träger.

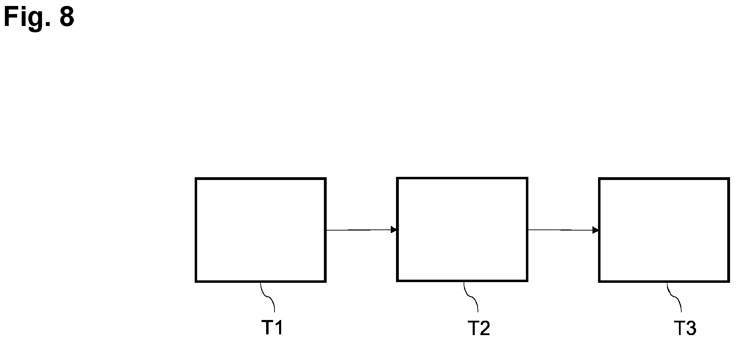

Figur 8 zeigt in schematischer Form Schritte eines Verfahrens gemäß einer Ausführungsform der vorliegenden Erfindung.

Figur 8 zeigt Schritte eines Verfahrens zum Lösen eines an einem Träger festgelegten Bauteils.

Das Verfahren umfasst die Schritte:
- Bereitstellen T1 einer Mutter gemäß einem der Ansprüche 1-11 in ihrer Geschlossenposition an dem Bauteil, wobei das Bauteil ein Außengewinde aufweist, welches zu dem Gewinde der Mutter korrespondiert und wobei das Gewinde der Mutter in das Außengewinde des Bauteils eingreift,
- Betätigen T2 des Gewindes der Mutter durch Drehen der Mutter zum Lösen des Bauteils von dem Träger bis sich die Mutter in ihrer Offenposition befindet, und
- Schieben T3 der Mutter in ihrer Offenposition über das Außengewinde des Bauteils zum Lösen des Bauteils von dem Träger.

Zusammenfassend weist zumindest eine Ausführungsform der vorliegenden Erfindung zumindest eines der folgenden Merkmale auf und/oder kann zumindest einen der folgenden Vorteile bereitstellen:
- Einfache, kostengünstige und schnelle Montage und Demontage.
- Einfache, kostengünstige Herstellung.
- Wenig Bauteile für die Mutter.
- "Selbstschließende" Mutter.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Mutter
- 2: Erstes Mutterteil
- 2a: Randfläche
- 3: Zweites Mutterteil
- 3a: Vorsprung
- 4: Gewindelasche
- 4a: Anfangsbereich Gewindelasche
- 4b: Endbereich Gewindelasche
- 5: Gewinde
- 6: Kulisse
- 6a: Abrundung Kulisse
- 7: Kulissenelement
- 7a: Abrundung Kulissenelement
- 8: Rückstelleinrichtung
- 9: Feder
- 10: Gewindeflanken

- 20,21: Flächen

- 50: Bauteil/Sanitärarmatur
- 50a: Außengewinde
- 51: Träger/Arbeitsplatte
- 52: Zwischenelement/Stabilisationsdreieck
- 53: Elastisches Element/Gummischeibe
- 54: Festes Element/Metallscheibe

- 91: Erster Winkel
- 92: Zweiter Winkel

- 100: System
- 101: Axialrichtung
- 102: Radialrichtung
- 103: Festlegungsrichtung

- 201: Offenposition
- 202: Geschlossenposition

- S1-S6: Schritte eines Verfahrens
- T1-T3: Schritte eines Verfahrens

## Patentansprüche

1. Mutter (1) zur Festlegung eines Bauteils (50) an einem Träger (51), insbesondere einer Sanitärarmatur an einer Arbeitsplatte, umfassend
ein erstes Mutterteil (2), und
ein zweites Mutterteil (3), wobei
das erste Mutterteil (2) zumindest zwei Gewindelaschen (4) aufweist, die auf ihrer radialen Innenseite ein Gewinde (5) aufweisen, wobei die Gewindelaschen (4) unter einem ersten Winkel (91) radial nach außen vorstehend angeordnet sind, und wobei die beiden Mutterteile (2, 3) relativ zueinander axial verschiebbar (101) angeordnet sind, derart, dass in einer ersten Position - Offenposition (201) - die Gewindelaschen (4) des ersten Mutterteils (2) radial nach außen vorstehend angeordnet sind, und dass in einer zweiten Position - Geschlossenposition (202) - die Gewindelaschen (4) des ersten Mutterteils (2) mittels des zweiten Mutterteils (3) radial nach innen gedrückt werden zum Eingriff in ein entsprechendes Außengewinde (50a) des Bauteils (50).

2. Mutter (1) gemäß Anspruch 1, **dadurch gekennzeichnet, dass** das erste (2) und zweite Mutterteil (3) aneinander mittels einer Festlegeeinrichtung (6, 7) festgelegt sind, welche insbesondere lösbar ausgebildet ist, vorzugsweise wobei
die Festlegeeinrichtung (6, 7) eine Rast-, Clips- oder Schnappeinrichtung umfasst.

3. Mutter (1) gemäß einem der Ansprüche 1-2, **dadurch gekennzeichnet, dass** eine Rückstelleinrichtung (8) angeordnet ist, die eine Rückstellkraft in Richtung der Offenposition (201) ausübt, vorzugsweise wobei
die Rückstelleinrichtung (8) eine Federeinrichtung mit zumindest einer Feder (9) umfasst, die zwischen erstem und zweitem Mutterteil (2, 3) angeordnet ist.

4. Mutter (1) gemäß Anspruch 3, **dadurch gekennzeichnet, dass** die Rückstelleinrichtung (8) zueinander korrespondierende, aneinander gleitbare und gegenüber der axialen Richtung (101) unter einem zweiten Winkel (92) abgeschrägte Flächen (20, 21) an erstem und zweitem Mutterteil (2, 3) umfasst, vorzugsweise wobei
der zweite Winkel (92) größer ist als der erste Winkel (91).

5. Mutter (1) gemäß Anspruch 4, **dadurch gekennzeichnet, dass** der zweite Winkel (92) bezogen auf die axiale Richtung (101) zumindest 5 Grad, insbesondere zumindest 10 Grad, vorzugsweise zumindest 15 Grad, insbesondere zumindest 30 Grad beträgt.

6. Mutter (1) gemäß einem der Ansprüche 1-5, **dadurch gekennzeichnet, dass** der erste Winkel (91) der Gewindelaschen (4) bezogen auf die axiale Richtung (101) zumindest 0,1 Grad, insbesondere zumindest 0,5 Grad, vorzugsweise zumindest 1 Grad, insbesondere zumindest 3 Grad beträgt.

7. Mutter (1) gemäß einem der Ansprüche 1-6 **dadurch gekennzeichnet, dass** die Anzahl der Gewindelaschen (4) weniger als 30, vorzugsweise weniger als 15, insbesondere weniger als 8, vorzugsweise 4 beträgt.

8. Mutter (1) gemäß einem der Ansprüche 1-7, **dadurch gekennzeichnet, dass** Gewindeflanken (10) des Gewindes (5) zumindest einer der Gewindelaschen (4), insbesondere von jeder Gewindelasche (4), im Bereich, der dem Endbereich (4b) der zumindest einen Gewindelasche (4) abgewandt ist, gekürzt sind, insbesondere wobei der Bereich (4a) mehr als eine Gewindeflanke (10) und/oder weniger als 5 Gewindeflanken (10), vorzugsweise 2 Gewindeflanken (10) des Gewindes (5) umfasst.

9. Mutter (1) gemäß einem der Ansprüche 1-8, **dadurch gekennzeichnet, dass** eine Führungseinrichtung (6, 7) zur definierten Führung von erstem und zweitem Mutterteil (2, 3) aneinander angeordnet ist, insbesondere wobei die Führungseinrichtung (6, 7) als Festlegeeinrichtung ausgebildet ist.

10. Mutter (1) gemäß Anspruch 9, **dadurch gekennzeichnet, dass** die Führungseinrichtung (6, 7) eine Kulisseneinrichtung mit zumindest einer Kulisse (6) und einem Kulissenelement (7) umfasst, insbesondere wobei das Kulissenelement (7) an dem ersten Mutterteil (2) angeordnet ist, vorzugsweise wobei
mehrere Kulissen (6) mit Kulissenelementen (7) angeordnet sind, insbesondere wobei die Anzahl jeweils mehr als 3 und weniger als 6, vorzugsweise jeweils 4 beträgt.

11. Mutter (1) gemäß Anspruch 10, **dadurch gekennzeichnet, dass** das zumindest eine Kulissenelement (7) und die Kulisse (6) jeweils abgerundet (6a, 7a) sind.

12. System (100) zur Festlegung eines Bauteils (50) an einem Träger (51), umfassend
eine Mutter (1) gemäß einem der Ansprüche 1-11, wobei das Bauteil (50) ein Außengewinde (50a) aufweist, welches zu dem Gewinde (5) der Mutter (1) korrespondiert, sodass die Mutter (1) in ihrer Geschlossenposition (202) auf das Außengewinde (50a) aufschraubbar ist und wobei in ihrer Offenposition (201) das Gewinde (5) zumindest in einem Bereich (4b) einen Innendurchmesser aufweist, der größer ist als der Au-ßendurchmesser des Außengewindes (50a).

13. System gemäß Anspruch 12, **dadurch gekennzeichnet, dass** in der Offenposition der Mutter (1) das Gewinde zumindest in einem Bereich (4a) einen Innendurchmesser aufweist, der kleiner oder gleich dem Außendurchmesser des Außengewindes (50a) ist.

14. Verfahren zum Festlegen eines Bauteils (50) an einem Träger (51), umfassend die Schritte
- Bereitstellen (S1) einer Mutter (1) gemäß einem der Ansprüche 1-11 in der Offenposition (201),
- Bereitstellen (S2) des Bauteils (50), wobei das Bauteil (50) ein Außengewinde (50a) aufweist, welches zu dem Gewinde (5) der Mutter (1) korrespondiert, sodass die Mutter (1) in ihrer Geschlossenposition (202) auf das Außengewinde (50a) aufschraubbar ist,
- Anordnen (S3) des Bauteils (50) an dem Träger (51),
- Schieben (S4) der Mutter (1) in ihrer Offenposition (201) über das Außengewinde (50a) des Bauteils (50), bis die Mutter (1) mit ihrem zweiten Mutterteil (3) an dem Träger (51) anliegt,
- Betätigen (S5) des ersten Mutterteils (2), bis sich die Mutter (1) in ihrer Geschlossenposition (202) befindet zum Eingriff des Gewindes (5) in das Außengewinde (50a) des Bauteils (50), und
- Betätigen (S6) des Gewindes (5) der Mutter (1) durch Drehen der Mutter (1) zum Festlegen des Bauteils (50) an dem Träger (51).

15. Verfahren zum Lösen eines an einem Träger (51) festgelegten Bauteils (50), umfassend die Schritte
- Bereitstellen (T1) einer Mutter (1) gemäß einem der Ansprüche 1-11 in ihrer Geschlossenposition (202) an dem Bauteil (50), wobei das Bauteil (50) ein Au-ßengewinde (50a) aufweist, welches zu dem Gewinde (5) der Mutter (1) korrespondiert, und wobei das Gewinde (5) der Mutter (1) in das Außengewinde (50a) des Bauteils (50) eingreift,
- Betätigen (T2) des Gewindes (5) der Mutter (1) durch Drehen der Mutter (1) zum Lösen des Bauteils (50) von dem Träger (51) bis sich die Mutter (1) in ihrer Offenposition (201) befindet, und
- Schieben (T3) der Mutter in ihrer Offenposition (201) über das Außengewinde (50a) des Bauteils (50) zum Lösen des Bauteils (50) von dem Träger (51).
